# NEUE EUROPÄISCHE PATENTSCHRIFT

(11) **EP 0 294 798 B2**
(45) Veröffentlichungstag und Bekanntmachung des Hinweises auf die Entscheidung über den Einspruch: **31.01.1996**
(45) Hinweis auf die Patenterteilung: 26.08.1992
(21) Anmeldenummer: 88109178.9
(22) Anmeldetag: 09.06.1988
(51) Int. Cl.: A62B 25/00, B64D 11/00

(54) **Sauerstoffversorgungseinheit mit einem Sauerstoffgenerator zum Einbau in Fluggeräte**
Aircraft oxygen supply unit with oxygen generator
Dispositif d'aménagement d'oxygène pour avion comportant un générateur d'oxygène

(30) Priorität: 11.06.1987 DE 3719427
(43) Veröffentlichungstag der Anmeldung: 14.12.1988
(73) Patentinhaber: Drägerwerk Aktiengesellschaft, D-23542 Lübeck (DE)
(72) Erfinder: Röhling, Holmer, Dipl.-Ing., D-2067 Reinfeld (DE); Preininger, Siegfried, Dipl.-Ing., D-2406 Stockelsdorf (DE); Schulz, Frank, Dipl.-Ing., D-2300 Klausdorf/Schwentine (DE)

(56) Entgegenhaltungen:
- BE-A- 435 119
- DE-C- 3 506 043
- US-A- 2 813 690
- US-A- 3 536 070
- US-A- 3 981 302
- US-A- 4 609 166

## Beschreibung

Die Erfindung betrifft eine Sauerstoffversorgungseinheit nach den Merkmalen des Oberbegriffs des Hauptanspruches.

Eine derartige Versorgungseinheit ist in der US-A-3 981,302 beschrieben.

Ferner zeigt die US-A-3,615,250 eine Sauerstoffversorgungseinheit, bei der in den Deckenaufbauten im Passagierraum eines Flugzeuges ein Sauerstoffgenerator sowie mehrere Sauerstoffmasken innerhalb eines Gehäuses untergebracht sind, welches im Bedarfsfall durch eine Klappe öffenbar ist, wobei nach Herausziehen der Sauerstoffmasken der Sauerstoffgenerator gezündet wird und während einer bestimmten Zeit den zur Atmung notwendigen Sauerstoff abgibt.

Bei diesen bekannten Sauerstoffversorgungseinheiten sind die wesentlichen Einzelteile, wie Sauerstoffgenerator und Sauerstoffmasken, jeweils einzeln an dem Gehäuseboden aufgenommen, so daß dieser die notwendige Festigkeit aufweisen muß, um den während des Flugbetriebes auftretenden Belastungen standhalten zu können. Dadurch ergeben sich aufwendige Verstrebungen bzw. Materialverdickungen, damit die auftretenden Kräfte aufgenommen werden können.

Da jedoch besonders in Großraumflugzeugen jede mögliche Gewichtsersparnis zu einer Verminderung der Betriebskosten führt, sind derartig aufwendige Befestigungskonstruktionen zu vermeiden, insbesondere deswegen, weil jeder Sitzreihe eine solche Sauerstoffversorgungseinheit zugeordnet sein muß.

Insbesondere sind für eine länger notwendige Sauerstoffversorgung größere Sauerstoffgeneratoren notwendig, so daß deren Benutzung eine noch weitergehende Verstärkung des Aufnahmegehäuses zur Folge hat.

Der vorliegenden Erfindung liegt somit die Aufgabe zugrunde, bei gleichbleibender Stabilität der gesamten Anordnung eine möglichst hohe Gewichtseinsparung zu erzielen, so daß auch Sauerstoffgeneratoren für eine längere Gebrauchsdauer einsetzbar sind.

Die Lösung der Aufgabe erfolgt mit den kennzeichnenden Merkmalen des Hauptanspruchs.

Die Vorteile der Erfindung liegen im wesentlichen darin, daß nunmehr ein gewichtsmäßig leichter, aber den Gebrauchsbeanspruchungen gerecht werdender Tragerahmen den Sauerstoffgenerator an einer beliebigen Stelle aufnehmen kann, so daß die Kraftübertragungen auf den steifen Rahmen und nicht mehr auf den schwingungsempfindlichen Boden einer Gehäuseschale übergeleitet werden. Der Anbringungsort für den Steg ist variabel gestaltbar, so daß je nach Größe des Generators und nach Anzahl der zu versorgenden Sauerstoffmasken ein geeigneter Platz für ihn gewählt werden kann. Durch einfaches Lösen des Steges mit dem Sauerstoffgenerator kann im Bedarfsfall ein spiegelbildlicher Wechsel der Anordnung der Einzelteile innerhalb des Verstärkungsrahmens vorgenommen werden, so daß eine gemeinsame Ausführungsform für eine Rechts-/Links-Ausführung der Versorgungseinheit gewählt werden kann.

Nach Verbrauch des Sauerstoffgenerators kann dieser schnell ausgewechselt werden. Die Gehäusebelastung unter dem statischen Gewicht und auch während des Betriebes unter dynamischen Kräfteeinwirkungen ist sehr gering, so daß die Gehäusewände und der Gehäuseboden dünnwandig ausgeführt und aus leichtem Material (Kunststoff) hergestellt werden können. Dabei ist eine einstükkige Ausführungsform möglich, bei welcher sowohl der Verstärkungsrahmen als auch der Gehäuseboden mit seinen Wänden aus einem Teil gefertigt werden können; dazu kann der Verstärkungsrahmen zweckmäßigerweise mit zusätzlichen Verstärkungselementen, wie z. B. Sicken oder Verstärkungsbeschlägen, ausgestattet sein.

Durch die separate Aufhängung des Sauerstoffgenerators an dem Verstärkungsrahmen können die übrigen Gehäuseteile, wie Seitenwände und Gehäuseboden, in ausreichendem Abstand zum Generatorgehäuse geführt sein, so daß eine notwendige Wärmeisolation verbessert werden kann, indem beispielsweise wärmedämmendes Material zwischen das Gehäuse des Sauerstoffgenerators und die ihm naheliegende Seitenwand gebracht werden kann. In den meisten Fällen kann aber nun durch geeigneten Abstand zwischen Sauerstoffgenerator und Gehäusewand eine ausreichende Luftzirkulation erzielt werden, welche zum Abtransport der Wärme geeignet ist. Eine solche Verbesserung der Wärmeisolierung ist besonders dann von Vorteil, wenn Sauerstoffgeneratoren mit längerer Gebrauchsdauer eingesetzt werden.

Eine besonders günstige Form für den Verstärkungsrahmen wird in einer rechteckigen Ausführung gesehen, wobei der Steg dann lotrecht zu je zwei Seitenwänden verlaufen kann. Dadurch ist ein Auswechseln des Generators mit einfachen Mitteln möglich, indem lediglich zwei Schnellverschlüsse an den Verbindungsteilen zwischen Steg und Rahmen betätigt werden müssen. Wahlweise kann der Steg auch so befestigt sein, daß er an seiner einen Seite an dem Rahmen angelenkt ist, und an seiner anderen Seite mit einem Schraub- bzw. Spannverschluß befestigt ist.

Besonders vorteilhaft erscheint die Ausführungsform, bei welcher der Steg als ein Teil des Verstärkungsrahmens ausgebildet und an diesem entlanggeführt ist. Dadurch ist es möglich, Sauerstoffgeneratoren in Form von aneinander gereihten Einzelkerzen, wie sie in der DE-OS 34 46 550 beschrieben sind, entlangzuführen. Durch diese Anordnung erzielt man eine platzsparende Ausführungsform, die besonders geeignet ist, wenn Sauerstoffgeneratoren von längerer Gebrauchsdauer eingesetzt werden sollen.

Zur weiteren Gewichtseinsparung können die Masken an dem mit einem Deckel versehenden Gehäuse befestigt werden. Dann kann sogar ein von dem Rahmen getragener Gehäuseboden entfallen, der sonst zur Aufnahme der Sauerstoffmasken notwendig ist.

Vorteilhafterweise kann an dem Steg eine Halterung vorgesehen sein, an welcher die Maskenaufhängungen der mitzuführenden Sauerstoffmasken gemeinsam aufgenommen sind. Durch diese Bündelung der Maskenaufhängungen ist eine geordnete Aufnahme aller Einzelteile innerhalb des Rahmens möglich, zumal die Maskenaufhängung bei Entnahme der Masken aus dem Gehäuse dazu benutzt wird, um den Starter des Sauerstoffgenerators zu initiieren, indem die Aufhängung aus ihrer Halterung gerissen und gespannt wird, worauf die Zündung unmittelbar erfolgt. Auch bei Verlagerung des Steges innerhalb des Rahmens je nach erforderlicher Anordnung bleibt die Halterung der Maskenaufhängungen immer in der Nähe des Starters für den Sauerstoffgenerator an ihrem günstigsten Anbringungsort.

Ein Ausführungsbeispiel der Erfindung wird in der schematischen Darstellung gezeigt und im folgenden näher erläutert.

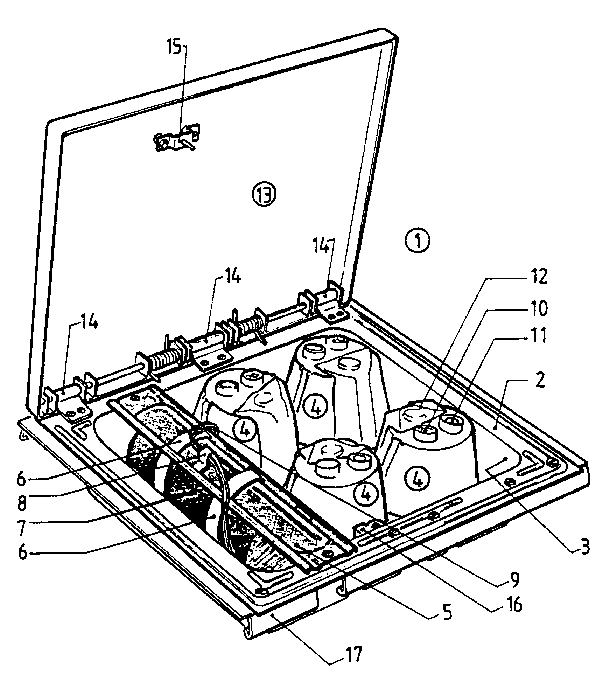

In der einzigen Figur ist eine Sauerstoffversorgungseinheit in einem geöffneten Gehäuse (1) dargestellt. Die tragende Konstruktion des Gehäuses (1) bildet ein Verstärkungsrahmen (2), welcher rechteckförmig ausgebildet ist. Eine tiefgezogene, dünnwandige und leichte Kunststoffhalbschale (3) ist an dem Rahmen (2) umlaufend befestigt und nimmt auf ihrem Boden vier Halbmasken (4) auf. Neben den Halbmasken (4) ist quer über dem Verstärkungsrahmen (2) ein Steg (5) befestigt, an dessen dem Boden der Halbschale (3) zugewandten Unterseite mittels zweier Schraubbänder (6) ein Sauerstoffgenerator (7) angebunden ist. Auf der Oberseite des Steges (5) ist eine Halterung (8) angebracht, in welcher die gebündelten Maskenaufhängungen (9) aufgenommen sind. Die Halbmasken (4) selbst besitzen ein Einatemventil (10) und ein Ausatemventil (11) sowie einen Atembeutel (12), der mit einer nicht dargestellten Verbindungsleitung zum Sauerstoffgenerator (7) angeschlossen ist.

An einer der Längsseiten des Verstärkungsrahmens (2) ist ein Deckel (13) an Scharnieren (14) angelenkt. Ein Verschluß (15) schnappt im geschlossenen Zustand in eine Verriegelung (16) am Verstärkungsrahmen (2). Zum Einbau der vollständigen Versorgungseinheit in ein Fluggerät ist ein Schienensystem (17) vorgesehen.

## Patentansprüche

1. Sauerstoffversorgungseinheit mit einem Sauerstoffgenerator (7) zur Speisung einer oder mehrerer Sauerstoffmasken (4), die zusammen mit dem Sauerstoffgenerator (7) in einem öffenbaren Gehäuse (1) aufgenommen sind, an welchem eine mit ihm verbundene Halterung befestigt ist, die den Sauerstoffgenerator (7) aufnimmt, dadurch gekennzeichnet, dass das Gehäuse (1) von einem Verstärkungsrahmen (2) getragen ist, an welchem die als Steg (5) ausgebildete Halterung, die den Rahmen (2) überspannt, losbar befestigt ist.

2. Sauerstoffversorgungseinheit nach Anspruch 1, dadurch gekennzeichnet, daß der Steg (5) lotrecht zu zwei Seitenwänden eines rechteckigen Verstärkungsrahmens (2) verläuft.

3. Sauerstoffversorgungseinheit nach Anspruch 1, dadurch gekennzeichnet, daß der Steg (5) als Teil des Verstärkungsrahmens (2) ausgebildet ist und längs des Rahmens (2) verläuft, wobei der Sauerstoffgenerator (7) durch mehrere, der Wegführung des Rahmens (2) folgende, miteinander verbundene Einzelkerzen in einem gemeinsamen Gehäuse gebildet ist.

4. Sauerstoffgenerator nach einem der Ansprüche 1 bis 3, dadurch gekennzeichnet, daß die Masken (4) an dem mit einem Deckel (13) versehenen Gehäuse (1) befestigt sind.

5. Sauerstoffversorgungseinheit nach einem der Ansprüche 1 bis 4, dadurch gekennzeichnet, daß am Steg (5) eine Halterung (8) zur gemeinsamen Aufnahme der Maskenaufhängungen (9) vorgesehen ist.

## Claims

1. Oxygen supply unit with an oxygen generator (7) for the feeding of one or more oxygen masks (4), which are accommodated together with the oxygen generator (7) in a housing (1) which can be opened, to which housing a support connected to it is fastened, which support accommodates the oxygen generator (7), characterized in that the housing (1) is supported by a reinforcing frame (2), to which the support, constructed as a bar (5), is releasably fastened, which support spans the frame (2).

2. Oxygen supply unit according to claim 1, characterized in that the bar (5) extends perpendicular to two side walls of a rectangular reinforcing frame (2).

3. Oxygen supply unit according to claim 1, characterized in that the bar (5) is constructed as part of the reinforcing frame (2) and extends along the frame (2), whereby the oxygen generator (7) is formed in a common housing by several individual ignitors following the path guide of the frame (2) and connected to one another.

4. Oxygen generator according to one of claims 1 to 3, characterized in that the masks (4) are fastened to the housing (1) which is provided with a cover (13).

5. Oxygen supply unit according to one of claims 1 to 4, characterized in that on the bar (5) a holder (8) is provided for the common accommodation of the mask attachments (9).

## Revendications

1. Unité d'alimentation en oxygène comportant un générateur d'oxygène (7) pour l'alimentation d'un ou de plusieurs masques à oxygène, logés, avec le générateur, dans un boîtier (1) susceptible d'être ouvert, sur lequel est fixée une pièce de fixation liée avec lui, qui reçoit le générateur d'oxygène (7), caractérisée en ce que le boîtier (1) est porté par un cadre de renforcement (2), sur lequel est fixée de façon amovible la pièce de fixation se présentant sous la forme d'une barrette (5), qui est disposée sur le cadre (2).

2. Unité d'alimentation en oxygène selon la revendication 1, caractérisée en ce que la barrette (5) s'étend perpendiculairement par rapport à deux parois latérales d'un cadre de renforcement (2) rectangulaire.

3. Unité d'alimentation en oxygène selon la revendication 1, caractérisée en ce que la barrette (5) forme une partie du cadre de renforcement (2) et s'étend le long du cadre (2), le générateur d'oxygène (7) étant composé de plusieurs bougies distinctes suivant le profil du cadre (2), et réunies dans un boîtier commun.

4. Unité d'alimentation en oxygène selon l'une quelconque des revendications 1 à 3, caractérisée en ce que les masques (4) sont fixés dans le boîtier (1) équipé d'un couvercle (13).

5. Unité d'alimentation en oxygène selon l'une quelconque des revendications 1 à 4, caractérisée en ce qu'une pièce de fixation (8) est prévue sur la barrette (5) pour recevoir l'ensemble des suspensions de masques (9).
